# EUROPEAN PATENT APPLICATION

(11) **EP 2 853 836 A2**
(43) Date of publication of application: **01.04.2015**
(21) Application number: 14169971.0
(22) Date of filing: 27.05.2014
(51) Int. Cl.: F24F 13/32, F24F 1/00, F24F 1/32

(54) **Air conditioning system**

(30) Priority: 05.07.2013 FI 20135738
(71) Applicant: Rautiainen, Timo, 41330 Vihtavuori (FI)
(72) Inventor: Rautiainen, Timo, 41330 Vihtavuori (FI)
(74) Representative: Helke, Kimmo Kalervo

(57) **Abstract**

The invention relates to an air conditioning system including
- equipment for forming a cold and/or hot fluid flow in a pipe network (12),
- at least one room-specific air conditioning unit (14) removably fixable to the frame of a building for heating and/or cooling a room,
- a mounting frame (16) equipped with guide rails (18) for connecting the air conditioning unit (14) to the frame of the building,
- connectors (22) for each air conditioning unit for con necting the pipe network (12) and at least one air condi tioning unit (14) to each other.

The frame of the building in the pipe network (12) includes at least one shut-off valve (32) for closing and releasing the fluid flow between the pipe network (12) and the air conditioning unit (14), and the air conditioning system (10) further includes water removal equipment (30) fastened to said mounting frame (16).

## Description

The invention relates to an air conditioning system, which includes
- equipment for forming a cold and/or hot fluid flow in a pipe network,
- at least one room-specific air conditioning unit removably fixable to the frame of a building for heating and/or cooling a room,
- a mounting frame equipped with guide rails for connecting the air conditioning unit to the frame of the building,
- connectors for each air conditioning unit for connecting the pipe network and at least one air conditioning unit to each other.

Air conditioning systems require regular maintenance to maintain their performance. As regards air conditioning systems integrally built in the buildings, they require a hatch for the maintenance of the air conditioning unit. The implementation of a maintenance hatch is often problematic, because it is necessary to leave a space for the hatch on the ceiling or a wall, and making it equal with the rest of the ceiling or wall surface creates problems.

A modular air conditioning unit for an air conditioning system disclosed in US 4,852,362 is known as prior art, which air conditioning unit can be removed for maintenance. In this solution, the air conditioning unit also includes a cooling unit, which makes the equipment large and complicated. Therefore, removing the air conditioning unit for maintenance is also complicated.

A modular air conditioning unit, which is mounted on mounting frames, is known from publication JP2007139283 A. However, the removal and installation of the air conditioning unit is difficult when the pipe network is connected to the side of the air conditioning unit.

The object of the invention is to provide an air conditioning system which allows easier maintenance. Another object is to provide an air conditioning unit, which can be implemented without a maintenance hatch. The characteristic features of this invention are set forth in the appended claim 1.

This object can be achieved with an air conditioning system, which includes equipment for forming a cold and/or hot fluid flow in the pipe network, at least one room-specific air conditioning unit removably fixable to the frame of the building for heating and/or cooling the room, as well as a mounting frame equipped with guide rails for connecting the air conditioning unit to the frame of the building. In addition, the air conditioning system includes connectors for each air conditioning unit for connecting the pipe network and at least one air conditioning unit to each other, as well as water removal equipment connected to the mounting frame. The frame of a building in the pipe network includes at least one shut-off valve for closing and releasing the fluid flow between the pipe network and the air conditioning unit. Thus, the air conditioning unit is easily removable for maintenance and reconnectable after the maintenance, in which case the air conditioning system can be implemented without separate maintenance hatches. With quick connectors and water removal equipment, detaching the air conditioning unit from the mounting frame is fast and easy. The water removal equipment fastened to the mounting frame remains always in place to prevent any water escaping from the pipe network from entering the constructions.

Advantageously, the connectors are quick connectors. Thus, the mounting frame can be manufactured without separate maintenance hatches for the connectors.

Using a mounting frame equipped with guide rails, the air conditioning unit can be easily reinstalled so that the connectors will automatically align with those of the pipe network and the air conditioning unit. In other words, the air conditioning unit moves to and from the mounting frame along the guide rails so that it can be reinstalled precisely in the same place.

According to an embodiment, the connectors are fixedly connected to the pipe network for each air conditioning unit. Thus, only the air conditioning unit is removed for maintenance, which facilitates lifting off the air conditioning unit.

Advantageously, the air conditioning system includes a connector unit between the pipe network and the air conditioning unit comprising connectors for connecting these to each other. The connector unit is fastened to the air conditioning unit. Thus, the connector unit can be withdrawn together with the air conditioning unit.

According to an embodiment, the air conditioning system includes two or more connector units for connecting two or more convectors to each other. Thus, both the cold and hot circuits of the air conditioning system can have their own circuits in the air conditioning unit.

Quick connectors may include a sleeve and a pipe fitted with an 0-ring seal to form a tightly sealed connection. Such a quick connection is inexpensive to manufacture and allows a small amount of angular misalignment.

The connectors may include a shut-off valve for preventing the fluid flow of the air conditioning unit. Thus, fluid that has remained inside the air conditioning unit can be prevented from flowing out during the maintenance.

According to an embodiment, the water removal equipment included in the air conditioning system is placed in the vertical direction essentially below the connectors. With the water removal equipment, fluid or condensed water leaking from the connectors can be recovered thereby preventing moisture damage caused by possible leaks.

The guide rails are disposed parallel to the pipes included in the air conditioning unit. In this way, mounting the air conditioning unit to the connectors and thereby to the pipe network is effected with the same parallel movement by which the air conditioning unit is installed in the mounting frame.

Advantageously, the width of the air conditioning unit may be 10-25 cm smaller than the mounting frame in the transverse direction relative to the guide rails, for using the connectors. Thus, a space remains between the mounting frame and the air conditioning unit, through which space the person servicing the air conditioning unit can open and close the shut-off valve.

The air conditioning system may include at least one deaeration valve disposed in the vicinity of the connectors for deaerating the air conditioning unit. This enables deaeration of each air conditioning unit while reinstalling the air conditioning unit in the air conditioning system.

Advantageously, the air conditioning system includes several air conditioning units. Thus, the easy maintainability of an individual air conditioning unit is emphasised and time can be notably saved during the work.

The air conditioning unit may include at least a convector and a fan. Thus, the air conditioning unit is relatively light in weight and easily removable from the mounting frame.

According to an embodiment, the air conditioning unit includes remote operating means for operating the shut-off valve without removing the mounting frame. Thus, shut-off valves can be closed without a separate maintenance hatch via the interior of the mounting frame, for example.

The remote operating means may include a draw arm penetrating the mounting frame for operating the shut-off valve. With the draw arm, the user can easily operate the shut-off valve, for example, by putting his hand inside the mounting frame.

The air conditioning system may include electrical connectors for each air conditioning unit for connecting the air conditioning unit to the electrical network. With electrical connectors, the air conditioning unit can be connected to the electrical network with the same movement as is used for connecting it to the pipe network using connectors. This accelerates the reconnection of the air conditioning unit to the air conditioning system.

Advantageously, the mounting frame has pipe and electrical connections that are perfectly aligned with the pipes and electrical connectors of the air conditioning unit, and these can be securely locked in place.

Advantageously, the mounting frame is open on one side only. Thus, the strength of the mounting frame is good and it is first-class for its aesthetic properties.

The air conditioning system according to the invention can be implemented to be easily serviceable without the need of a maintenance hatch.

The invention is described below in detail by making reference to the appended drawings illustrating some of the embodiments of the invention, in which
- Figure 1a: presents an axonometric basic view of an individual air conditioning unit of the air conditioning system according to a first embodiment of the invention,
- Figure 1b: presents an axonometric basic view of an individual air conditioning unit of the air conditioning system according to a second embodiment of the invention,
- Figure 2: presents an axonometric view of connectors of an individual air conditioning unit of the air conditioning system according to the invention,
- Figure 3: presents a top view of operating means of the connectors of the air conditioning system according to the invention,
- Figure 4a: presents the connectors of the air conditioning system according to the invention for the pipes of the warm and hot fluid flow,
- Figure 4b: presents a lateral cross-sectional view of the connectors of the air conditioning system according to the invention.

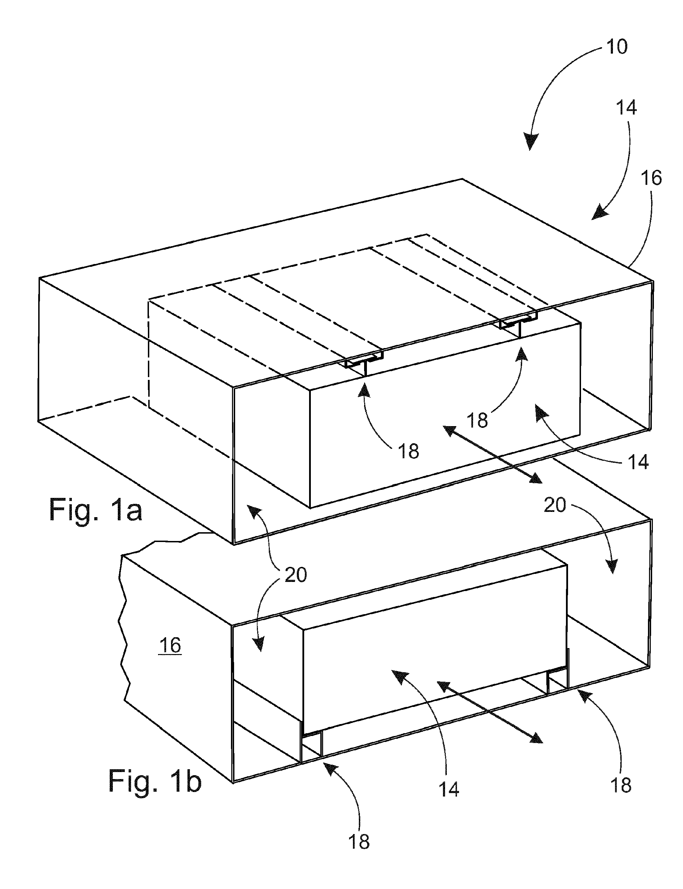

Figures 1a and 1b show two advantageous embodiments of an air conditioning unit of the air conditioning system according to the invention. The air conditioning system according to the invention includes equipment for forming a cold and/or hot fluid flow in a pipe network, at least one room-specific and removably fastenable air conditioning unit 14, and connectors for each air conditioning unit for connecting the pipe network and at least one air conditioning unit 14 to each other. As shown in Figures 1a and 1b, the air conditioning unit 14 is arranged to be fastened to a mounting frame 16 (also called a mounting rack), which mounting frame 16 includes guide rails 18. As regards the mounting frame, it is fastened to the frame of a building or, for example, between the wall and a ceiling of the room that requires air conditioning. The air conditioning unit 14 is moveable on the guide rails 18 in the longitudinal direction of the guide rails 18, which direction is advantageously parallel to the connectors of the air conditioning system 10. Thus, the air conditioning unit 14 can be easily pushed in place as well as removed from the mounting frame 16 during the maintenance. As shown in Figures 1a and 1b, the mounting frame 16 is advantageously open on one of its sides only, having thus very high strength and first-class aesthetic properties.

As shown in Figure 1a, the guide rails 18 of the mounting frame 16 can be formed above the air conditioning unit 14 so that the air conditioning unit 14 hangs, supported by the guide rails 18, from the mounting frame 16, which is fixedly fastened to the frame of the building. Alternatively, as shown in Figure 1b, the guide rails can also be formed below the air conditioning unit 14 so that the weight of the air conditioning unit 14 rests on the guide rails 18. The mounting frame may include locking equipment for locking the air conditioning unit to the mounting frame.

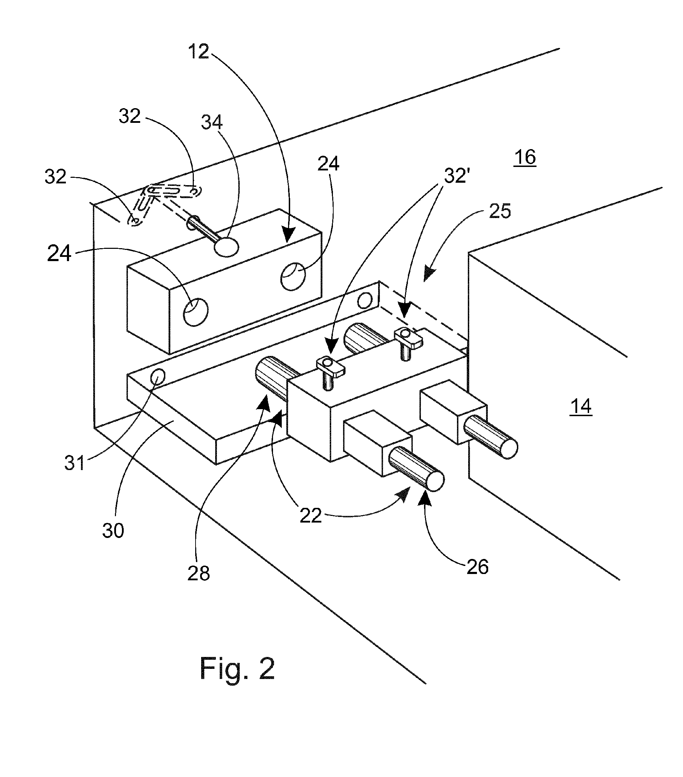

As shown in Figure 2, the connectors 22 of the air conditioning system are advantageously quick connectors, and the pipe network 12 in the frame of the building includes at least one shut-off valve 32 for closing and releasing the fluid flow between the pipe network 12 and the air conditioning unit 14. In this context, quick connectors refer, for example, to connectors that are self-sealable by means of a sleeve and a pipe equipped with 0-ring seals, which are installed in place with a pushing motion. Advantageously, the quick connectors are not equipped with a self-closable construction, because these can be unreliable. During the installation of the air conditioning system, shut-off valves 32 can be connected to the pipe network 12 in both the inlet and outlet flow pipes. The purpose of these shut-off valves is to close the fluid flow to the air conditioning unit 14 during the installation and maintenance of the air conditioning unit. The number of valves in the air conditioning system is sufficient for closing the flow of the fluid, advantageously water, arriving from the pipe network. For example, the shut-off valve 32 may be formed outside the room, and the coupling connectors 24 of the pipe network 12 are disposed between the wall of the room and the mounting frame 16. The coupling connectors 24 of the pipe network 12 are advantageously fixed in place on the walls of the room and in the mounting frame 16. According to the invention, connectors 22 are included between the air conditioning unit 14 and the pipe network 12, which may be composed of a separate connector unit 25 including quick connection couplers 28 and 26 for connecting the coupling connectors 24 of the pipe network 12 and the internal pipes of the air conditioning unit 14 (not shown) to each other. The connector unit 25 is fastened to the air conditioning unit 24.

The connectors 22 are fastened to the air conditioning unit 14 with fastening screws (not shown) thus allowing the removal of the air conditioning unit 14 and the connectors 22 from the mounting frame 16 for maintenance. As shown in Figure 2, the connectors 22 can also include shut-off valves 32' of their own, with which the fluid flow present within the air conditioning unit 14 can be closed to prevent the fluid that has remained within the air conditioning unit 14 from flowing out of the air conditioning unit 14 during maintenance.

As shown in Figure 2, the air conditioning system also includes water removal equipment 30 connected to the mounting frame 16 for recovering water. The water removal equipment 30 is advantageously located vertically essentially below the connectors 22. For example, the water removal equipment 30 may consist of a sump designed for recovering water, to recover any water leaking between the connectors 22 and the pipe network 12 and the air conditioning unit 14. The water removal equipment 30 may include a connection line 31 to the drain so that the water removal equipment can remove even large amounts of water without water overflowing inside the mounting frame. The water removal equipment also removes any condense water from the interior of the mounting frame. When installed in the mounting frame, the water removal equipment always remains within the mounting frame to recover any water leaking from the pipes.

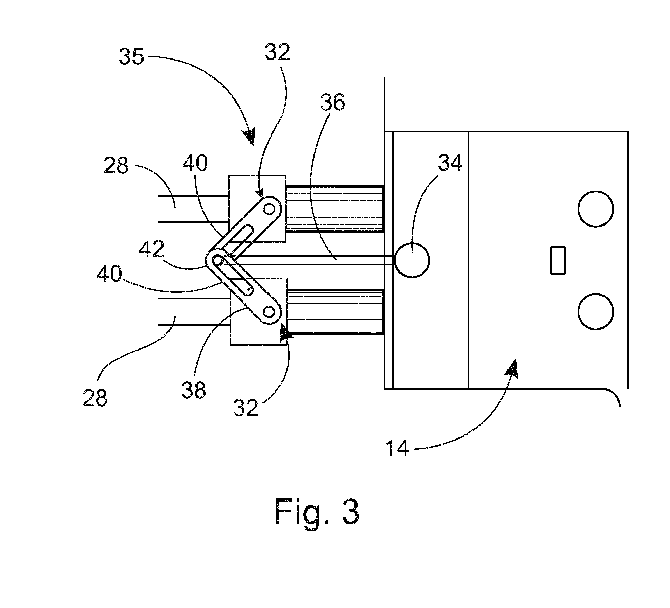

To return to Figures 1a and 1b, in the air conditioning system, the width of the air conditioning unit 14, in its cross direction relative to the guide rails 18, is advantageously by 10-25 cm smaller than that of the mounting frame 16. Thus, an empty space 20 remains between the mounting frame 16 and the air conditioning unit 14, at least on one side of the air conditioning unit 14. In the embodiments of Figures 1a and 1b, spaces 20 are provided on both sides of the air conditioning unit 14. Via this space 20, the person servicing the air conditioning unit has access to the shut-off valves 32, integrated in the building, of the pipe network 12 shown in Figure 2 and possible shut-off valves 32' of the air conditioning unit provided for the connectors 22. Figure 3 is a more detailed view of the construction of the remote operating means 35 designed for operating the shut-off valves 32 of the pipe network 12. Since the shut-off valves 32 of the pipe network 12 may be located outside the wall of the room, the person performing the maintenance must be able to close the shut-off valves while removing the air conditioning unit 14. The remote operating means 35, as shown in Figure 3, may include a draw arm 36 equipped with a knob 34, which is articulated to the operating arms 38 by way of a joint 42. As regards the operating arms 38, they are advantageously fastened to the shut-off valves 32, operated by them. A slot 40, in which the pin of the joint 40 can move, is formed in both operating arms 38. When the person performing the maintenance inserts his hand between the air conditioning unit 14 and the mounting frame 16 and pulls the draw arm 36, the draw arm 36 turns both operating arms 38 simultaneously thus closing the shut-off valves 32. The shut-off valves are opened using an opposite movement. The remote operating means can also consist of an electrical control for the shut-off valves, if the shut-off valves are electrically controllable.

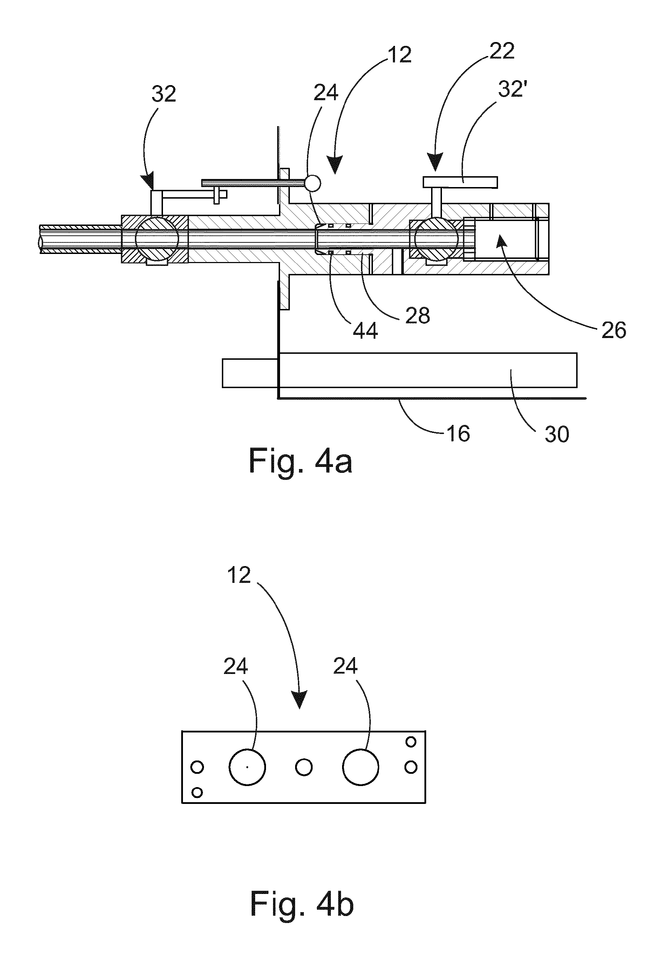

Figure 4a shows a lateral cross-sectional view of the connectors 22 of the air conditioning unit according to the invention. As shown in Figure 4a, the connectors 22 are fastened to the coupling connectors 24 of the pipe network 12 by way of quick connection couplers 28. The quick connection couplers 28 may include, as shown in the figure, 0-ring seals 44, which make a watertight connection between the quick connection couplers 28 and the coupling connectors 24. In this case, the coupling connectors function as sleeves for the quick connectors, whereas 0-ring seals 44 are installed around the quick connecting couplers. The second quick connecting couplers 26 of the connectors 22 may also include 0-ring seals for sealing the connection between the quick connection couplers and the air conditioning unit. As shown in Figure 4a, the water removal equipment 30 is located directly below the connectors 22 so that water leaking from the connectors 22 can be recovered and, thus, it cannot cause water damage in any condition. As quick connectors, other solutions deviating from the figures can also be used, which can advantageously be sealed by way of a parallel movement of the air conditioning unit.

As shown in Figure 4b, the coupling connectors 24 of the pipe network 12 can be round openings to which the quick connecting couplers 28 of the connectors 22 of Figure 4a are inserted. The coupling connectors 24 of the pipe network are connected to the pipe network 12, within which the warm and/or cold fluid flow of the air conditioning system circulates. Advantageously, the guide rails 18 (Figures 1a and 1b) of the mounting frame 16 are parallel to the quick connecting couplers 28 of Figure 4a. At the same time, the guide rails guide the pipe connectors present in the air conditioning unit or the quick connecting couplers 28 of the connectors 22 fastened to the air conditioning unit directly to the coupling connectors 24 of the pipe network. Thus, the alignment of the air conditioning unit relative to the pipe network always takes place directly with the guide rails without separate installation-specific alignment of the air conditioning unit. This accelerates the reinstallation of the air conditioning unit after the maintenance.

The basic design of the air conditioning system can correspond to those of prior art air conditioning systems; i.e. each room or other facility to be cooled is equipped with an air conditioning unit of its own, to which cold or warm liquid medium is brought via a pipe network shared by all of the facilities. As regards the pipe network, it is connected to a condenser, for example, installed outside the building, with which, for example, heat transferred to the medium by the air conditioning unit is transferred out of the air conditioning system. Advantageously, the air conditioning unit includes a convector, connecting pipes led to this, and a fan, with which the temperature difference of the medium is utilised to cool or heat the facility, or both. In this case, the air conditioning system must have a sufficient number of valves and connectors. Connecting pipes are connected to the pipe network with connectors. Advantageously, an air blow and suction grille is disposed in front of the open side of the air conditioning unit and the mounting frame; after removing said grille, the air conditioning unit can be withdrawn from the mounting unit for maintenance and possible repairs and reinserted after the maintenance.

According to an embodiment, the air conditioning system may also include electrical connectors, with which the air conditioning unit is connected to the electrical network. Electrical connectors can also be arranged in such a way that they switch on the air conditioning unit, when the air conditioning unit is pushed in place inside the mounting frame.

According to an embodiment, in the air conditioning system, equipment is arranged in the vicinity of the connectors for removing air contained in the air conditioning unit of the air conditioning system. In this way, the person performing the maintenance can easily remove any air accumulated within the air conditioning system immediately after the installation of the air conditioning unit to ensure efficient performance of the air conditioning system at all times.

The air conditioning unit is generally removed performing the following steps. First, the person performing the maintenance closes the flow arriving from the pipe network by pulling the remote operating means i.e. the draw arm 36 (shown in Figure 3). The shut-off valves 32' of the air conditioning unit (Figure 4a) can be manually closed individually in each shut-off valve. The mounting screws of the connectors 22 (Figure 2) and the connectors of the electrical connectors are removed and the locking means of the air conditioning unit are opened. When the air conditioning unit is withdrawn from the mounting frame, all of its valves and equipment related to the electrical control come out together with the air conditioning unit. After the maintenance, the air conditioning unit is placed back on the guide rails and pushed inside the mounting frame. The mounting screws of the connectors as well as the electrical connectors are tightened. The shut-off valve of the pipe network is opened and air accumulated in the air conditioning system is released via the deaeration screws. A deaeration screw can be located in the shut-off valves of the air conditioning unit. Thereafter, the shut-off valves of the air conditioning unit are opened, and the air conditioning unit can operate normally.

For example, the mounting frame of the air conditioning system may be an encased structure made of sheet metal or steel plate, which is advantageously open on one of its sides, through which the air conditioning unit can be removed from the mounting frame. For example, as shown in Figure 1a, the guide rails 18 may be composed of a T-form rail formed at the upper edge of the air conditioning unit in its operating position, for which rail, two L-form support rails are provided in the mounting frame. Advantageously, the air conditioning unit 14 includes at least two guide rails 18, in which case the air conditioning unit 14 can be evenly supported, as shown in Figures 1a and 1b. Alternatively, as shown in Figure 1b, the guide rails may be L-form rails, for example, on which the air conditioning unit can be made to slide. The guide rails may also include a construction composed of rollers and rails, in which case the air conditioning unit moves supported by the rollers. According to an embodiment, in the mounting frame, the guide rails may be arranged on rails set transversely to the longitudinal direction of the guide rails, in which case the guide rails can be laterally moved, if required. Thus, the same mounting frame can be used for the installation of air conditioning units with many different widths.

The connectors may additionally include electrical valves and electrical control units, with which the operation of the air conditioning unit can be controlled.

An air conditioning system according to the invention can be used in any application, in which it is difficult to locate an air conditioning maintenance hatch. Advantageous applications include hotels, blocks of flats and equivalent that include several facilities requiring cooling or heating, in which case several, several tens or even hundreds of air conditioning units will be employed. In such cases, the easy and quick maintainability of an individual air conditioning unit becomes emphasised.

## Claims

1. An air conditioning system including
- equipment for forming a cold and/or hot fluid flow in a pipe network (12),
- at least one room-specific air conditioning unit (14) removably fixable to the frame of a building for heating and/or cooling a room,
- a mounting frame (16) equipped with guide rails (18) for connecting the air conditioning unit (14) to the frame of the building,
- connectors (22) for each air conditioning unit for con necting the pipe network (12) and at least one air conditioning unit (14) to each other,
**characterised in that** the frame of the building in the pipe network (12) includes at least one shut-off valve (32) for closing and releasing the fluid flow between the pipe network (12) and the air conditioning unit (14), and the air conditioning system (10) further includes water removal equipment (30) fastened to said mounting frame (16).

2. An air conditioning system according to claim 1, **characterised in that** said connectors (22) are quick connectors.

3. An air conditioning system according to claim 1 or 2, **characterised in that** said connectors (22) are fixedly connected to the pipe network (12), for each air conditioning unit (14).

4. An air conditioning unit according to any of claims 1 - 3, **characterised in that** said connectors (22) include a shut-off valve (32') for preventing the fluid flow of the air conditioning unit (14).

5. An air conditioning system according to any of claims 1 - 4, **characterised in that** said water removal equipment (30) is located essentially below, in the vertical direction relative to the connectors (22) for recovering water.

6. An air conditioning system according to any of claims 1 - 5, **characterised in that** said guide rails (18) are arranged parallel to the pipes included in the air conditioning unit (14).

7. An air conditioning system according to any of claims 1 - 6, **characterised in that** the width of said air conditioning unit (14) in the cross direction relative to the guide rails (18) is advantageously by 10-25 cm smaller than that of said mounting frame (16), for operating the connectors (22).

8. An air conditioning system according to any of claims 1 - 7, **characterised in that** the air conditioning system (10) includes at least one deaeration valve disposed in the vicinity of said connectors (22), for deaerating the air conditioning unit (14).

9. An air conditioning system according to any of claims 1 - 8, **characterised in that** the air conditioning unit (14) includes remote operating means (35) for operating the shut-off valve (32) without removing said mounting frame (16).

10. An air conditioning system according to claim 9, **characterised in that** the remote operating means (35) include a draw arm (36) penetrating the mounting frame (16) for operating the shut-off valve (32).

11. An air conditioning system according to any of claims 1 - 10, **characterised in that** the air conditioning system (10) includes electrical connectors for each air conditioning unit for connecting the air conditioning unit (14) to the electrical network.
